# EUROPEAN PATENT SPECIFICATION

(11) **EP 3 842 152 B1**
(45) Date of publication and mention of the grant of the patent: **08.03.2023**
(21) Application number: 19219512.1
(22) Date of filing: 23.12.2019
(51) Int. Cl.: B04C 5/04, B04C 5/185, B04C 5/20, B04C 9/00, B01D 45/12, B01D 46/24, B01D 46/42, B01D 50/20

(54) **OFF GAS CLEANING FOR MOX SINTERING PLANTS WITH INTEGRATED CYCLONE**
ABGASREINIGUNG FÜR MOX-SINTERANLAGEN MIT INTEGRIERTEM ZYKLON
ÉPURATION DES GAZ RÉSIDUELS POUR LES INSTALLATIONS DE FRITTAGE DE MOX À CYCLONE INTÉGRÉ

(43) Date of publication of application: 30.06.2021
(73) Proprietor: ALD Vacuum Technologies GmbH, 63457 Hanau (DE)
(72) Inventor: Lippert, Lothar, 63755 Alzenau (DE); Herdler, Sven, 63776 Mömbris (DE); Fachinger, Johannes, 63674 Altenstadt (DE); Sitzmann, Bernd, 63505 Langenselbold (DE)
(74) Representative: Fuchs Patentanwälte Partnerschaft mbB

(56) References cited:
- EP-A2- 2 833 367
- CN-A- 106 000 664
- DE-U1-202017 101 798
- GB-A- 641 357
- JP-A- 2004 283 677
- JP-A- 2006 102 657
- JP-A- 2011 145 123
- US-A1- 2017 128 957

## Description

### Field of the invention

The present invention relates to improvements in the field of off gas cleaning in the context of mixed oxide (MOX) sintering. In particular, the present invention relates to off gas cleaning for MOX sintering plants with integrated cyclone separator.

One aspect relates to a cyclone separator for separating solid parts from an off gas, the cyclone separator being in particular configured for installation in an off gas glove box. Another aspect relates to a corresponding cyclone separator arrangement. Another aspect relates to a corresponding off gas glove box for a MOX pellet sintering furnace. Another aspect relates to a method for separating solid parts, such as MOX particles, from an off gas. Another aspect relates to the cooling of an off gas. This aspect relates to the condensations of organic substances in the off gas stream. This aspect is related to the removal of condensable organic substance from the off gas stream. Further aspects relate to an off gas glove box for a MOX pellet sintering furnace, the off gas box having an improved overall configuration and/or arrangement with regard to maintenance and/or cleanability of the off gas glove box. Another aspect relates to an off gas glove box for a MOX pellet sintering furnace, the off gas box having an improved arrangement of cooling lines.

### Background of the invention

In the process of obtaining nuclear fuel elements the downstream treatment of off-gases plays an important role. A common process of obtaining nuclear fuel elements is the process of sintering MOX pellets, out of UOz and PuO₂. During pellet production process gas in a sintering furnace will be contaminated with radioactive particles, for example MOX particles, and/or other harmful substances, for example zinc stearate. Therefore, contaminated process gas is directed as off gas to a purification system coupled to the sintering furnace (i.e. to a pre-sintering zone of the MOX plant). The purification system is typically configured to filter and cool the off gas, before the filtered and cooled off gas is exhausted into the end user's ventilation system.

Purification systems known from practice are often designed as off gas glove boxes and typically comprise various heat exchangers, HEPA (High Efficiency Particulate Air) filters and fluid cooled filters.

JP 2004 283677 A discloses a cyclone apparatus including a cyclone body of a vertical cylindrical shape, a powder-introducing pipe, an exhaust pipe, and a secondary air-introducing pipe. The powder-introducing pipe is provided by peripherally tangentially extending a part of the cyclone body in order to horizontally let in an air-flow containing scattered powder along the inside wall surface of the cyclone body. The exhaust pipe is provided penetratingly at the center of a top plate covering the top of the cyclone body in order to discharge upward the air in the cyclone body. The air introducing pipe introduces the secondary air tangentially to the cyclone body at a position at 45-180° from the powder-introducing pipe.

US 2017/128957 A1 discloses a cyclone main body including a cylinder-shaped upper barrel and an inverse cone-shaped lower barrel; a top plate which covers a top edge of the upper barrel and includes an opening at a center portion; a first introduction pipe which introduces a first fluid containing powder along an inner wall surface of the cyclone main body; a second introduction pipe which is disposed near the top plate in a portion upper than the first introduction pipe and introduces a second fluid; an exhaust pipe which is inserted in the opening of the top plate along a vertical center axis of the cyclone main body, makes an exhaust flow rise from the cyclone main body, and discharges the exhaust flow from the cyclone main body; and a collecting section which collects powder separated by turning movement of each of the first fluid and the second fluid in the cyclone main body.

JP 2006 102657 A discloses a cyclone apparatus for powder collection capable of collecting desired fine particles with particle sizes of sub-micron to micron order with a good yield. This cyclone apparatus for powder collection is formed to have a feed pipe for introducing powder tilted upward in relation to the horizontal plane, and to introduce air flow from a compressor in the tangential direction of the inner wall of a cylindrical part such that the air flows along the upper inner wall and a top plate of the cylindrical part, thus enhancing the powder collection efficiency.

CN 106 000 664 A discloses a cyclone separator comprising a hollow separator body which is divided into an upper body and a lower body, wherein the upper body is of a cylindrical shape and the lower body is of a funnel shape. A down-oblique gas inlet pipe is arranged on one side of the upper body, and the axis of the gas inlet pipe and the axis of the upper body are skew lines. A gas outlet is formed in the upper part of the upper body, a gas outlet pipe is connected to the lower part of the gas outlet, a horn mouth is formed in the lower part of the gas outlet, and a liquid outlet is formed in the lower part of the lower body. A plurality of down-oblique atomizing air cocks are arranged in the lower part of the gas inlet pipe, and the angles of inclination of the atomizing air cocks are 20°-25°; and an anti-corrosion layer is arranged in the separator body.

DE 20 2017 101798 U1 discloses a mixing separator for hot gases, comprising a mixing chamber with an inner wall that is essentially symmetrical to an axis of rotation; a gas to be cooled in order to form a flow circulating on the inner wall in a direction of rotation; at least one inlet connection opening into the mixing chamber to form a flow of cooling gas circulating on the inner wall in the direction of rotation for a cooling gas; an immersion pipe opening out in the center of the mixing chamber below the inlet connection, viewed along the axis of rotation, for sucking off gas from the mixing chamber; and a particle outlet arranged on a bottom of the mixing chamber.

JP 2011 145123 A discloses a powder recovery device for recovering powder in a glove box including a compressed air supply plug exposed to inside of the glove box chamber for supplying compressed air for work, and an air exhaust device for maintaining the pressure in the glove box chamber lower than external air. It further includes an ejector gun for generating a negative pressure using the compressed air supplied by being connected to the compressed air supply plug, a powder suction pipe for sucking in the powder in the glove box chamber by generating powder sucking air current by the negative pressure generated by the ejector gun, and a cyclone separator for separating the powder by centrifugation from the powder sucking air current by being placed in between the ejector gun and the powder suction pipe. The cyclone separator includes a centrifuge body for separating the powder by swirling the powder sucking air current and a powder recovery container for housing the separated powder by being detachably attached to the centrifuge body.

EP 2 833 367 A2 discloses a system for processing activated, contaminated and/or non-contaminated residues, in which activated, contaminated and/or non-contaminated residues or waste are recycled in a modular design with low radiation exposure and low transport costs after separation and/or decontamination landfill or a waste store. Also disclosed is a radioactive material separation system comprising manual type or crawler type concrete cutters for removing the top layer of a concrete floor, a vacuum hose for sucking the resulting dust into a dust separator, a dust collector with a cylindrical cap projecting from the top of the collector, and a filter, such as a ceramic blowback candle filter, placed over the cylindrical cap.

There is a need for further improving such purification systems in order to achieve an enhanced purification and cooling of off gas.

This need is solved by the subject matter according to the independent claims.

### Summary of the invention

An aspect relates to a cyclone separator for separating solid parts from an off gas (an exhaust gas), in particular for installation in an off gas glove box, preferably for a MOX pellet sintering furnace. The term solid parts as used herein can include solid substance, solid particles, solid particulates and/or liquid components. Solid parts, solid particles or liquid components (organic components condensed by temperature drop) as described herein can be radioactive substances, such MOX particles, and/or other harmful substances, such as zinc stearate.

The cyclone separator comprises an elongated hollow body having a longitudinal axis, a first end, a second end opposite the first end and a circumferential wall extending from the first end to the second end. The elongated hollow body can have the form of a cylinder, at least partially, and/or can have the form of a frustum, at least partially. The cyclone separator is provided with a first opening on the first end and a second opening on the second end. The first opening and the second opening can be opposite to one another. The first opening and the second opening can be coaxially and/or concentric.

When in use, i.e. installed in a purification system such as an off gas glove box, the elongated hollow body of the cyclone separator can be vertically orientated. In this case, the first end can be an upper end and the second end can be a lower end.

The cyclone separator comprises a first lateral gas inlet for supplying the off gas to an inside of the elongated hollow body, wherein the first lateral gas inlet is provided in the circumferential wall of the elongated hollow body. The lateral gas inlet allows a tangential insertion of the off gas into the inside of the elongated hollow body. By inserting the off gas into the inside of the elongated hollow body via the first lateral gas inlet, the off gas hits and is directed along the inner surface of the circumferential wall whereby solid parts (particles, particulates) are separated from the off gas by rotational effects and gravity (vortex separation). Such separation effects and functions are known from cyclonic separation systems and methods.

The cyclone separator comprises a second lateral gas inlet for supplying an additive gas (dilution gas or purge gas) to the inside of the elongated hollow body, wherein the second lateral gas inlet is provided in the circumferential wall of the elongated hollow body and wherein the second lateral gas inlet is spaced from and provided in the vicinity of the first lateral gas inlet, preferably by at least 1 mm, more preferably at least 5 mm, still more preferably at least 10 mm. The second lateral gas inlet allows a tangential insertion of the additive/purge/dilution gas into the inside of the elongated hollow body. The additive/purge/dilution gas can for example be nitrogen.

By inserting additive gas into the inside of the elongated hollow body via the second lateral gas inlet, which is spaced from and provided in the vicinity of the first lateral gas inlet, the off gas is further accelerated and the overall gas flow is increased, which enhances the vortex separation effects and thus improves the separation of solid parts and liquid or solid organic components condensed out of the off gas stream from the off gas. Thus, at least 75 % of all solid parts of the off gas can be separated by the cyclone separator, preferably at least 85 %, more preferably at least 95 %. Further separation can be achieved by one or more downstream filter/s, such as HEPA filters.

Further, by inserting additive gas into the inside of the elongated hollow body in addition to the off gas, i.e. by mixing the off gas and the additive gas, the hot off gas can be abruptly cooled by at least ΔT = 100° C, preferably by at least ΔT = 150 °C, more preferably by at least ΔT = 200 °C. For example, the off gas can thus be cooled from an input temperature of approx. 400° C to an output temperature of approx. 200° C. Hence, a faster and enhanced cooling of the off gas can be achieved. The temperature difference ΔT by which the off gas is abruptly cooled can be adapted, e.g., by means of the mixing ratio (volume flow) of the off gas and the additive gas.

Further, by inserting additive gas into the inside of the elongated hollow in addition to the off gas, i.e. by mixing the off gas and the additive gas, the hydrogen concentration of the off gas can be reduced. For example, in an off gas being an argon-hydrogen mixture (e.g. 6 %), the hydrogen concentration can be significantly reduced (e.g. less than 4 %)by inserting the additive gas as described. As mentioned before the additive gas can be nitrogen gas.

The cyclone separator comprises a gas outlet for outputting the off gas and the additive gas. In particular, the gas outlet can be provided for outputting a mixture of the off gas and the additive gas, from which a substantial percentage of solid parts has already been separated as described above.

The cyclone separator comprises or is connectable with a container for collecting the solid parts separated from the off gas. More precisely, the elongated hollow body is connectable or connected with a container for collecting the solid or liquid parts, such as MOX particles and/or zinc stearate, that have been separated from the off gas.

The first lateral gas inlet can be arranged on a portion of the circumferential wall in the vicinity of the first end. The second lateral gas inlet can be arranged on a portion of the circumferential wall in the vicinity of the first end.

The first lateral gas inlet can comprise at least one portion, such as a first tubular connector, that extends transversely to the longitudinal axis of the elongated hollow body. In an embodiment in which the elongated hollow body is oriented vertically, the at least one portion of the first lateral gas inlet can be oriented horizontally. The second lateral gas inlet can comprise at least one portion, such as a second tubular connector, that extends transversely, preferably perpendicularly, to the longitudinal axis of the elongated hollow body. In an embodiment in which the elongated hollow body is oriented vertically, the at least one portion of the second lateral gas inlet can be oriented horizontally.

The gas outlet of the cyclone separator can be arranged at the first end of the elongated hollow body, i.e. at the upper end in a vertically oriented elongated hollow body. Preferably, the gas outlet can be the first opening of the elongated hollow body or can be a part of the first opening, preferably arranged in the center of the first opening. In the latter case, the first opening can be partly closed by a cover comprising the gas outlet. In particular, the gas outlet can be concentric to the first opening.

The container for collecting the separated solid parts can be connectable to or connected with the second end of the elongated hollow body. The container, the first opening, the second opening and optionally the gas outlet can be coaxially aligned. The container can preferably be connectable to or connected with the second end of the elongated hollow body by a container connection flange.

The container for collecting the separated solid parts and/or liquid components can be a collection pot.

The container for collecting the separated solid parts can be removably connectable to or connected with the elongated hollow body. Thus, the container can be manually or automatically be removed for emptying, cleaning and/or replacing the container.

The cyclone separator can comprise a cooling arrangement for cooling the off gas inside the elongated hollow body. More precisely, the cooling arrangement can be configured to cool the elongated hollow body of the cyclone separator, which consequently cools the off gas inside the elongated hollow body. The cooling arrangement can be configured to distribute a cooling medium, such as cooling water, and can be connectable with a cooling circuit. The cooling arrangement can be in the form of at least one tube or a plurality of interconnected tubes extending helically along an outer surface of the circumferential wall of the elongated hollow body. The at least one tube or the plurality of tubes can be fastened, e.g. welded, to the circumferential wall. By means of the cooling arrangement, the off gas can be further cooled before leaving the elongated hollow body through the gas outlet.

A minimum cross-sectional area of the first lateral gas inlet for supplying the off gas to an inside of the elongated hollow body can be larger than a minimum cross-sectional area of the second lateral gas inlet for supplying an additive gas to the inside of the elongated hollow body. The ratio of the minimum cross-sectional area of the first lateral gas inlet to the minimum cross-sectional area of the second lateral gas inlet can be at least 10:1, preferably at least 20:1, more preferably at least 30:1, still more preferably at least 40:1, in particular 44:1. By this ratio a preferably mixture of off gas and additive gas for optimally separating and cooling the off gas can be achieved. The ratio of the diameter of the first lateral gas inlet to the diameter of the second lateral gas inlet can be at least 3:1, preferably at least 4:1, more preferably at least 5:1, still more preferably at least 6:1. For example, the diameter of the first lateral gas inlet can be 100 mm. For example, the diameter of the second lateral gas inlet can be 15 mm.

Another aspect relates to a cyclone separator arrangement, in particular for an off gas glove box. The cyclone separator arrangement comprises a cyclone separator of the type described above, i.e. comprising one or more of the features described above, and a filter device connected with a gas outlet of the cyclone separator. The filter device comprises an elongated filter housing and a filter being arranged inside the filter housing. The cyclone separator arrangement can further comprise one or more of the below features.

In an aspect, a cyclone separator arrangement comprises a cyclone separator for separating solid parts from an off gas, in particular for installation in an off gas glove box, wherein the cyclone separator comprises an elongated hollow body having a longitudinal axis, a first end, a second end and a circumferential wall. The cyclone separator further comprises a first lateral gas inlet for supplying the off gas to an inside of the elongated hollow body, the first lateral gas inlet being provided in the circumferential wall of the elongated hollow body, and a second lateral gas inlet for supplying an additive gas to the inside of the elongated hollow body, the second lateral gas inlet being provided in the circumferential wall of the elongated hollow body and being spaced from the first lateral gas inlet. The cyclone separator further comprises a gas outlet for outputting the off gas and the additive gas. The elongated hollow body is connected with a container for collecting the solid parts separated from the off gas. The cyclone separator arrangement further comprises a filter device connected with the gas outlet of the cyclone separator, wherein the filter device comprises an elongated filter housing and a filter being arranged inside the filter housing.

The elongated filter housing, the filter and the elongated hollow body of the cyclone separator are coaxially aligned. In particular, the elongated filter housing, the filter, the elongated hollow body and the container are coaxially aligned. By means of this alignment, solid parts and contaminations separated by both the filter device and the cyclone separator can be collected together in one collector portion, preferably in the container.

The elongated filter housing has a first filter housing end and an opposite second filter housing end. The first filter housing end is configured in the form of a four way connector, and the second filter housing end is provided with an opening that is connected with the gas outlet of the cyclone separator. Preferably, the opening of the second filter housing end can be connected with the gas outlet by a filter connection flange.

The four way connector can comprise at least one opening, wherein the at least one opening can be coaxially aligned with the filter and the filter housing and can be removably closed by a cover, such that the filter is removable from the filter housing via the at least one opening. Moreover, after removal of the filter, the filter device and the elongated hollow body can be cleanable via the at least one opening. The cover can be a blind flange. In a vertically oriented cyclone separator and filter device, the at least one opening can be an upper opening. The four way connector can comprise more than the at least one opening.

In an aspect, a cyclone separator arrangement comprises a cyclone separator for separating solid parts from an off gas and a filter device for further (subsequent) filtering of the off gas. The cyclone separator and the filter device are connected with one another and can be coaxially aligned. This can improve the cleanability of the cyclone separator arrangement as the coaxial alignment allows brushing both the elongated filter housing and the elongated hollow body of the cyclone separator together and preferably through one single opening and/or preferably in one single step. The cyclone separator and the filter device can both be arranged substantially vertically when installed in a purification system such as an off gas glove box.

The cyclone separator comprises an elongated hollow body having a longitudinal axis, a first end, a second end opposite to the first end, and a circumferential wall. The first end can have a first opening and the second end can have a second opening. When in use, i.e. installed in a purification system such as an off gas glove box, the elongated hollow body of the cyclone separator can be vertically orientated. In this case, the first end can be an upper end and the second end can be a lower end. The cyclone separator further comprises a first lateral gas inlet for supplying the off gas to an inside of the elongated hollow body. The first lateral gas inlet is provided in the circumferential wall of the elongated hollow body, preferably in the vicinity of the first end. The cyclone separator further comprises a gas outlet for outputting the off gas and the additive gas. The elongated hollow body is connected with a container for collecting the solid parts separated from the off gas. The filter device is connected with the gas outlet of the cyclone separator. The filter device comprises an elongated filter housing and a filter being arranged inside the filter housing. The elongated filter housing and the elongated hollow body of the cyclone separator are coaxially aligned.

Further, the container is coaxially aligned with the elongated filter housing and the elongated hollow body of the cyclone separator. This coaxial alignment can also improve the cleanability of the cyclone separator arrangement as it allows collecting solid parts separated from the off gas both by the cyclone separator and by the filter device in a single, common container.

Preferably, the gas outlet can be coaxially aligned with the container, the elongated filter housing and the elongated hollow body of the cyclone separator. The gas outlet can be arranged at the first end (upper end) and the container can be arranged at the second end (lower end).

The cyclone separator arrangement, more precisely the cyclone separator, comprises a second lateral gas inlet for supplying an additive/diluting/purge gas to the inside of the elongated hollow body. The second lateral gas inlet is provided in the circumferential wall of the elongated hollow body and being in the vicinity of and spaced from the first lateral gas inlet.

The cyclone separator arrangement can comprise further features or feature combinations described above.

Another aspect relates to an off gas glove box, in particular for a MOX pellet sintering furnace. The off gas glove box comprises a cyclone separator of the type described above, i.e. comprising one or more of the features described above, or an off gas glove box comprises a cyclone separator arrangement of the type described above, i.e. comprising one or more of the features described above.

The off gas glove box can be connectable or connected to a pre-sintering zone of a sintering furnace unit and to an end user off gas ventilation system, wherein the off gas glove box is arranged between the pre-sintering zone and the ventilation system so that off gas from the pre-sintering zone can be directed through the off gas glove box, in which the off gas is separated, filtered and cooled, to the ventilation system.

Another aspect relates to a method for separating solid parts from an off gas, in particular using the cyclone separator of the type described above or a cyclone separator arrangement of the type described above. The method comprises the steps:
- supplying the off gas to a cyclone separator via a first lateral gas inlet of the cyclone separator;
- diluting the off gas inside the cyclone separator by supplying an additive gas to the cyclone separator via a second lateral gas inlet of the cyclone separator, the additive gas being preferably nitrogen;
- cooling the off gas within the cyclone separator by at least 100° C (temperature difference ΔT) by means diluting the off gas with the additive gas. Thus, the off gas can preferably be cooled abruptly by at least 100° C, e.g. from T1 (initial temperature of the off gas when entering the cyclone separator) to T2 (temperature of the off gas cooled by the additive gas), wherein T2 = T1 - 100° C or less.

It is apparent that when the off gas is supplied into the cyclone separator, in particular into an elongated hollow body of the cyclone separator, the off gas hits and is directed along the inner surface of the circumferential wall whereby solid and/or liquid parts (particles, particulates) are separated from the gas by rotational effects and gravity (vortex separation). Such separation effects and functions are known in the field of cyclonic separation systems and methods. In the present method, the vortex separation and underlying effects are further enhanced by additionally inserting the additive gas into the inside of the elongated hollow body, whereby the off gas is further accelerated and the overall gas flow is increased. Thus, at least 80 % of all solid parts of the off gas can be separated by the separating method, preferably at least 90 %, more preferably at least 95 %. Further separation can be achieved by additional subsequent filtering by one or more downstream filter/s, such as HEPA filters.

The method can comprise a step of collecting separated solid parts in a container.

The method can comprise a step of further cooling the off gas inside the cyclone separator by a cooling arrangement, the cooling arrangement being preferably in the form of at least one tube extending helically along an outer surface of the circumferential wall of the elongated hollow body.

Another aspect relates to a method for separating solid parts from an off gas using a cyclone separator of the type described above or a cyclone separator arrangement of the type described above.

Another aspect relates to an off gas glove box, in particular for a MOX pellet sintering furnace, which off gas glove box has an improved overall structure with regard to maintenance of the off gas glove box and its components.

The off gas glove box can comprise a base body having a shell type construction, preferably comprising stainless steel. The shell type construction can have a wall thickness of at least 6 mm. The base body, more precisely the shell type construction, can comprise a plurality of windows, which are preferably made of polycarbonate or any other suitable material. The base body can for example be provided with one or more windows on sides of the off gas glove box, each window having a substantially rectangular shape. For example, four windows can be provided in each of two opposing sides, which can be a side that faces the furnace unit when arranged in the plant and a side that faces away from the furnace unit. One or more further windows can be provided in the other sides of the base body.

The off gas glove box can have a structure with at least two, preferably three different levels, wherein the levels are arranged in different heights from an underground of the off gas glove box relative to one another. Such a configuration of the off gas glove box enables an improved accessibility of the off gas glove box for improved cleanability and maintainability of the off gas glove box and its components.

The off gas glove box can comprise a cleaning level, on which the off gas glove box can be cleaned by a user.

The off gas glove box, more precisely the base body, can comprise a plurality of interfaces between an outside and an inside of the off gas glove box, wherein the off gas glove box can be manually cleaned via these interfaces, e.g. by replacing containers in which separated particles of the off gas have been collected and/or by brushing pipes. Each of the plurality of interfaces can have a substantially circular shape. Each of the plurality of interfaces can be provided in one of the windows, wherein one window can comprise more than one interface. Each of the interfaces can be an aperture forming a glove and/or bag port. Each side of the base body can for example comprise more than 10, preferably more than 14, more preferably more than 18, still more preferably at least 20 interfaces. Other numbers of interfaces are possible, depending on the respective application. Further interfaces can be provided on sides of the base body not being the side facing to or away from the furnace unit. Bag ports can have larger diameters than glove ports. For example, a bag port can have a diameter of 300 mm.

The off gas glove box, more precisely the base body, in particular the side of the base body facing the furnace unit can further comprise an off gas aperture for introducing the off gas from the pre-sintering zone to the off gas glove box.

The off gas glove box can comprise a maintenance level, on which the off gas glove box can be maintained by maintenance personnel. More precisely, the maintenance level can be a platform above or formed by a top surface of the base body. The maintenance level can comprise exposed and thus accessible components which can be service, replaced, etc. Such components can be a nitrogen gas supply for a cyclone separator, nitrogen exhaust equipment, outside HEPA filters, struts and other equipment. The components can be arranged on a top of the off gas glove box. The maintenance level can be further spaced from the underground than the cleaning level. The maintenance level can comprise a maintenance platform that is spaced more than 2000 mm, preferably more than 2250 mm, more preferably more than 2500 mm, still more preferably approx. 2580 mm from the underground. The maximum height of the off gas glove box, i.e. its struts and equipment exposed on the maintenance level, can be approx. 4000 mm. The cleaning level can be is spaced from the underground. The cleaning level can comprise a cleaning platform that is spaced more than 1200 mm, preferably more than 1450 mm, more preferably more than 1600 mm, still more preferably approx. 1617 mm from the underground.

A user/maintenance personnel can access the cleaning level from the underground via a first set of steps connecting the underground to the cleaning level. A user/maintenance personnel can access the maintenance level via a second set of steps connecting the cleaning level to the maintenance level. One or both of the set of steps can be retractable.

The off gas glove box can comprise a ground level, preferably including a plurality of feet which support a base body of the off gas glove box on the underground. The off gas glove box can comprise six feet, which can each be adjustable.

The top surface of the base body can be provided with one or more windows, each window being equipped with a light source above the window in order to illuminate the inside of the off gas glove box.

The off gas glove box, in particular the top surface of the base body, can comprise a plurality of cooling line interfaces for connecting the cooling lines of the off gas glove box with corresponding cooling circuits of cooling fluid distribution arrangements.

Another aspect relates to an off gas glove box, in particular for a MOX pellet sintering furnace, which off gas glove box has an improved overall structure with regard to cleanability of the off gas glove box and its components, in particular its pipes.

The off gas glove box can comprise a plurality of pipe connections that are formed as four way connectors. Each four way connector can comprise at least one opening that is not connected to upstream or downstream treatment line path units or arrangements. The at least one opening can be removably closed by a cover, for example by a blind flange. The four way connector can comprise more than one such opening. When in use, i.e. in an installed state of the off gas glove box, each of the four way connectors can be oriented such that two of the four openings of the four way connector lie in a horizontal plane, while the other two of the four openings of the four way connector lie in a vertical plane. All lines/pipes connected with the openings of each four way connector can preferably be aligned with the corresponding opening. This enables a simplified cleaning of the treatment line paths of the off gas glove box via the opening/s that are not connected to upstream or downstream treatment line path units or arrangements. At least one opening of some of the four way connectors can be coupled to a container for collecting solid residues separated from the off gas.

Another aspect relates to an off gas glove box, in particular for a MOX pellet sintering furnace, which off gas glove box has an improved overall structure with a compact size.

The off gas glove box can comprise redundant treatment line paths, in particular two treatment line paths. Thus, one treatment line path can be maintained and/or cleaned, while the other treatment line path can be used for cooling, separating and filtering the off gas. Thus, continuous operation of the sintering furnace can be guaranteed. The redundant treatment line paths can be configured symmetrically to one another.

The off gas glove box can comprise at least one cooling unit with a plurality of cooling lines (cooling pipes) for cooling the off gas directed through the off gas glove box. Each treatment line path can comprise at least one cooling unit.

Each cooling unit can comprise six cooling lines. The cooling lines can be arranged hexagonally, i.e. in a hexagonal frame, in a (horizontal) cross-sectional view of the cooling lines/the cooling line arrangement. This reduces a base area of the off gas glove box and is thus advantageous with regard to the needed installation space in the MOX sintering plant.

The cooling lines can be connected in series. The cooling lines can be interconnected in a meandering pattern, so that the off gas is directed along a meandering path through the cooling lines. One of the cooling lines can comprise a cooling unit off gas inlet for entry of the off gas into the cooling unit. Another one of the cooling lines can comprise a cooling unit off gas outlet for output of the off gas from the cooling unit. Some of the cooling lines, preferably four cooling lines, in particular the cooling lines that do not comprise the cooling unit off gas inlet or the cooling unit off gas outlet, can respectively be connected on a first end (e.g. a top end) by a first bow pipe to an adjacent cooling line and on a second end (e.g. a bottom end) by a second bow pipe to another adjacent cooling line. The bow pipes can be 180° bows.

With other words, each cooling line (cooling pipe) can comprise one cleaning opening at an upper side of the line (pipe) and a container (collection pot) at a lower side of the line (pipe), wherein at least some of the containers are assigned to two adjacent pipes that share this container. In contrast to prior art off gas glove boxes, in which complete pipe bottom portions are to be replaced for cleaning purposes, in the present disclosure only the containers can be replaced for cleaning the cooling arrangement, i.e. for removing separated particles.

Each bow pipe on top ends of adjacent lines can be provided with a maintenance opening for maintenance purposes. The maintenance opening can be arranged in the center, i.e. on the top most portion, of the bow pipe. The maintenance opening can be removably closed by a blind flange or another removable cover.

Each bow pipe on bottom ends of adjacent lines can be provided with a collection device, e.g. a collection pot, for collecting solid residues. The collection device can be removable. The collection device can be provided in the center of the bow and can thus collect residues of both lines. The collection device can be replaced during maintenance.

Each cooling line can be provided with a cooling arrangement in the form of at least one tube or a plurality of interconnected tubes extending helically along an outer surface of the cooling line so as to cool the off gas inside the cooling line. The cooling arrangement can be connected to an external cooling circuit.

The off gas glove box can comprise an off gas supply arrangement for supplying the off gas from the pre-sintering zone/the furnace unit to the off gas glove box, off gas treatment line path selection valves for selecting a treatment line path through which the off gas is directed, a plurality of water cooled filters, heat exchangers and/or HEPA filter systems.

For separating and cooling the off gas, each of the treatment line paths can comprise a cyclone separator, at least one filter device, at least one cooling unit with a plurality of cooling lines for cooling the off gas directed through the off gas glove box, HEPA filters inside the base body and/or HEPA filters outside of the base body.

A connection between the off gas glove box and the pre-sintering zone of the furnace unit, i.e. the off gas supply arrangement, can comprise a compensator for allowing compensation of thermal expansion. The connection between the off gas glove box and the pre-sintering zone of the furnace unit, i.e. the off gas supply arrangement, can be encased by a protection cover, preferably made of perforated stainless steel, for preventing on operator from touching a hot off gas supply pipe.

Even though some features, functions, embodiments, technical effects and/or advantages have been described with regard to a cyclone separator, a cyclone separator arrangement, an off gas glove box, and/or a method for separating solid parts from an off gas, it will be understood that these features, functions, embodiments, technical effects and advantages can also apply, individually or in combination, accordingly to a cyclone separator, a cyclone separator arrangement, an off gas glove box, and/or a method for separating solid parts from an off gas. Further, even though some features, functions, embodiments, technical effects and/or advantages have been described with regard to particular aspects of a cyclone separator, a cyclone separator arrangement, an off gas glove box, and/or a method for separating solid parts from an off gas, it will be understood that these features, functions, embodiments, technical effects and advantages can also apply, individually or in combination, accordingly to other aspects of a cyclone separator, a cyclone separator arrangement, an off gas glove box, and/or a method for separating solid parts from an off gas described above.

### Brief description of the drawings

For a better understanding of embodiments of the invention and to show how the same may be carried into effect, reference will now be made, purely by way of example, to the accompanying drawings in which like numerals designate corresponding elements or sections throughout.

In the accompanying drawings:
- Fig. 1: shows a schematic view of a cyclone separator.
- Fig. 2: shows a schematic view of a cyclone separator arrangement including the cyclone separator of Fig. 1.
- Fig. 3: shows a schematic view of an off gas glove box.
- Fig. 4: shows a schematic view of treatment line paths inside the off gas glove box of Fig. 3.
- Fig. 5: shows an enlarged schematic view of cooling lines of one treatment line path of Fig. 4.

### Detailed description of the drawings

Various examples of embodiments of the present invention will be explained in more detail by virtue of the following embodiments illustrated in the figures and/or described below.

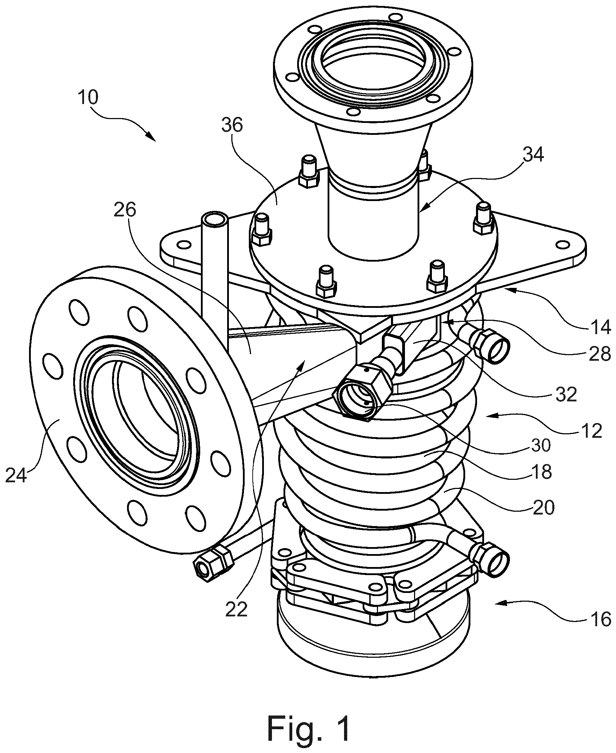

Fig. 1 shows a cyclone separator 10 for separating solid parts, particulates, or substances of an off gas. The cyclone separator 10 can in particular be installed in an off gas glove box or another purification system (not shown in Fig. 1).

The cyclone separator 10 comprises an elongated hollow body 12, which elongated hollow body 12 has a longitudinal axis, a first end 14 (upper end), a second end 16 (lower end) and a circumferential wall 18 extending between the first end 14 and the second end 16. The elongated hollow body 12 is cone shaped tapering from the first end 14 to the second end 16. Fig. 1 shows the cyclone separator 10 in an orientation as when in use, i.e. in an installed state of the cyclone separator 10. In this state the cyclone separator 10, more precisely the longitudinal axis of the elongated hollow body 12 is oriented in a vertical direction.

A cooling arrangement 20 in the form of a plurality of interconnected tubes extends helically around the elongated hollow body 12 along the longitudinal axis of the cyclone separator. The cooling arrangement 20 is connectable to a cooling circuit (not shown) for distributing cooling water in order to cool off gas inside the elongated hollow body 12. The cooling arrangement 20 is tack welded to the elongated hollow body 12.

The cyclone separator 10 further comprises a first lateral gas inlet 22 for supplying the off gas, being an argon-hydrogen mixture in the embodiment, to an inside of the elongated hollow body 12. The first lateral gas inlet is configured in the circumferential wall 18 of the elongated hollow body 12 in a region close to the first end 14 of the elongated hollow body 12. The first lateral gas inlet 22 allows a tangential insertion of the off gas into the inside of the elongated hollow body 12 so that the off gas hits and is directed along an inner surface of the circumferential wall 18, whereby solid parts (particles, particulates, substances) are separated from the off gas by rotational effects and gravity (vortex separation).

For inserting the off gas into the elongated hollow body 12, the first lateral gas inlet 22 is operationally connectable via a flange 24 to a pre-sintering zone of a MOX sintering furnace unit, in particular to an off gas line of a pre-sintering zone of a MOX sintering furnace unit. The first lateral gas inlet 22 further comprises a first tubular connector 26, that extends perpendicularly to the longitudinal axis of the elongated hollow body 12, i.e. is oriented horizontally in the shown embodiment. The first tubular connector 26 connects the flange 24 to the circumferential wall 18.

The cyclone separator 10 further comprises a second lateral gas inlet 28 for supplying an additive gas to the inside of the elongated hollow body 12. The additive (or dilution or purge) gas being nitrogen in the present embodiment. The second lateral gas inlet 28 is arranged in the circumferential wall 18 of the elongated hollow body 12 close to but spaced from the first lateral gas inlet 22. Thus, the second lateral gas inlet 28 is also configured in the circumferential wall 18 of the elongated hollow body 12 in a region close to the first end 14 of the elongated hollow body 12.

The second lateral gas inlet 28 enables a tangential insertion of the nitrogen into the inside of the elongated hollow body 12, which further accelerates the off gas and increased the overall gas flow. This enhances the vortex separation effects and thus improves the separation of solid parts from the off gas. Further, insertion of the additive gas into the inside of the elongated hollow body 12 in addition to the off gas mixes the off gas and the additive gas and thus cools the hot off gas abruptly cooled by at least ΔT = 100° C. Moreover, mixing the off gas and the additive gas, reduces the hydrogen concentration of the off gas up to halve of an initial hydrogen concentration of the off gas entering the cyclone separator 10.

For inserting the additive gas into the elongated hollow body 12, the second lateral gas inlet 28 is operationally connectable via a connector 30 to an additive gas supply system, more precisely to a nitrogen supply line of a nitrogen supply system. The first second gas inlet 28 further comprises a second tubular connection portion 32, that extends perpendicularly to the longitudinal axis of the elongated hollow body 12, i.e. is oriented horizontally in the shown embodiment. The second tubular connector 32 connects the connection portion 32 to the circumferential wall 18.

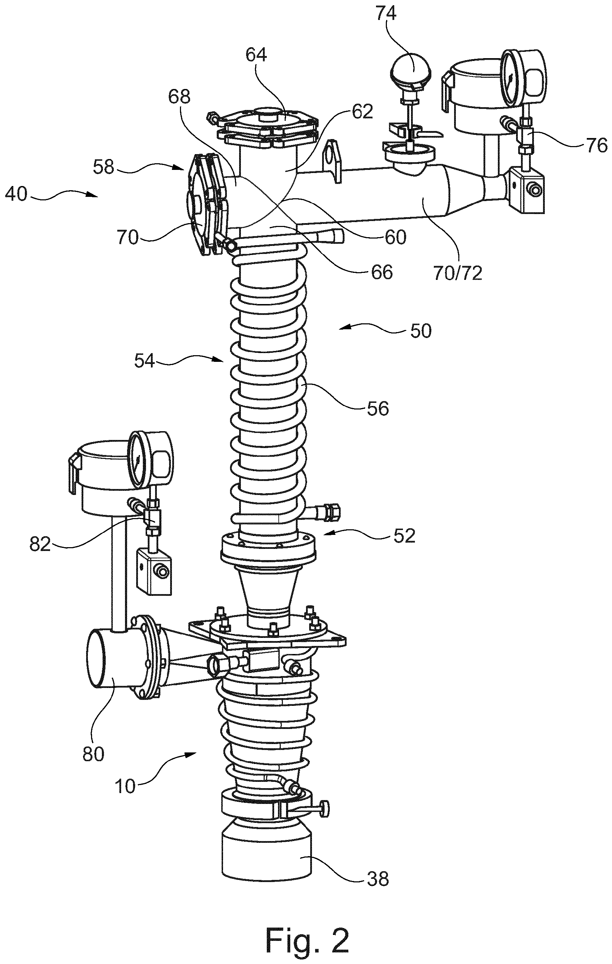

The cyclone separator 10 further comprises a gas outlet 34 for outputting the mixture of off gas and additive gas, which has previously been cleaned from solid and liquid parts in the cyclone separator 10, i.e. off gas without the separated amount of solid parts. As can be seen from Fig. 1, the gas outlet 34 is arranged at the first end 14 of the elongated hollow body 12, wherein the first end 14 has an opening partly closed by a cover 36 having an aperture forming the gas outlet 34. The gas outlet 34 is configured for being connected to a downstream filter device (see Fig. 2) by a connection portion 36. The connection portion 36 is formed as a compensator for compensating thermal expansions.

At the second end 16, the elongated hollow body 12 is connectable with a removable container (see Fig. 2) for collecting the solid parts separated from the off gas.

Fig. 2 shows a cyclone separator arrangement 40 for an off gas glove box or another purification system (not shown in Fig. 2). The cyclone separator arrangement comprises the cyclone separator 10 of Fig. 1. Most reference signs of features of the cyclone separator 10 shown in Fig. 1 have been omitted in Fig. 2 for better overview.

In the embodiment of Fig. 2, the lower second end 16 of the elongated hollow body 12 of the cyclone separator 10 is connected with a removable container 38 for collecting the solid parts separated from the off gas. The container 38 is configured as a collection pot. The collection pot can be removed for emptying, cleaning and/or replacing the collection pot.

The cyclone separator arrangement 40 comprises a filter device 50, which is connected to the upper first end 14 of the elongated hollow body 12 of the cyclone separator 10. More precisely, a lower end 52 of the filter device 50 is connected to the gas outlet 34 of the cyclone separator 10. Thus, the filter device 50 is arranged downstream of the cyclone separator 10 in view of the flow path of the off gas from a pre-sintering zone to an end user ventilation system. The filter device 50 is provided for further filtering the off gas subsequent to the separation by the cyclone separator.

The filter device 50 comprises an elongated filter housing 54 and a filter (not shown) being arranged inside the filter housing 54. The filter housing 54 and the filter contained therein are vertically oriented. The elongated filter housing 54, the filter, the elongated hollow body 12 of the cyclone separator 10 and the container 38 are coaxially aligned. By means of this alignment, solid parts and contaminations separated by both the filter device 50 and the cyclone separator 10 can be collected together in the container 38.

The elongated filter housing 54 comprises a filter cooling arrangement 56 in the form of a plurality of interconnected tubes. The filter cooling arrangement 56 extends helically around the elongated filter housing 54 along a longitudinal axis of the filter device 50. The cooling arrangement 56 is connectable to a cooling circuit (not shown) for distributing cooling water in order to cool off gas inside the elongated filter housing 54. The cooling arrangement 56 is tack welded to the elongated filter housing 54.

The filter device 50 has an upper end 58 opposite to the lower end 52 of the filter device 50, which upper end 58 is formed as a four way connector 60. An upper portion 62 of the four way connector 60 comprises an opening closed by a removable blind flange 64. A lower portion 66 of the four way connector 60 merges into the elongated filter housing 54. A left portion 68 of the four way connector 60 comprises an opening closed by another removable blind flange 70. A right portion 70 of the four way connector 60 merges into a connection tube 72 for connecting the filter device 50 to further downstream systems. The opening of the upper portion 62 of the four way connector 60 is coaxially aligned with the filter and the filter housing 54, such that the filter is removable from the filter housing 54 via the corresponding opening when the blind flange 64 is removed. Moreover, after removal of the filter, the filter device 50 can be cleanable via the opening. The opening of the of the upper portion 62 of the four way connector 60 (and the filter housing 54) is also coaxially aligned with the elongated hollow body 12 of the cyclone separator, the gas outlet 34 and the container 38. Thus, these components can be cleaned in one step together via the opening of the upper portion 62, when the blind flange 64 is removed. Further, solid particles of the off gas separated in the cyclone separator 10 and filtered in the filter device 50 can be collected together in the container 38. Blind flange 70 can be removed for simplified cleaning (e.g. brushing) of the adjacent horizontal tubing 68, 70, 72.

As further shown in Fig. 2, a connection pipe 80 between a valve (not shown) for switching between treatment line paths and the cyclone separator 10 is equipped with a pressure indicator 82 protected by a filter. The connection tube 72 is equipped with a thermocouple 74 and another pressure indicator 76 protected by a filter.

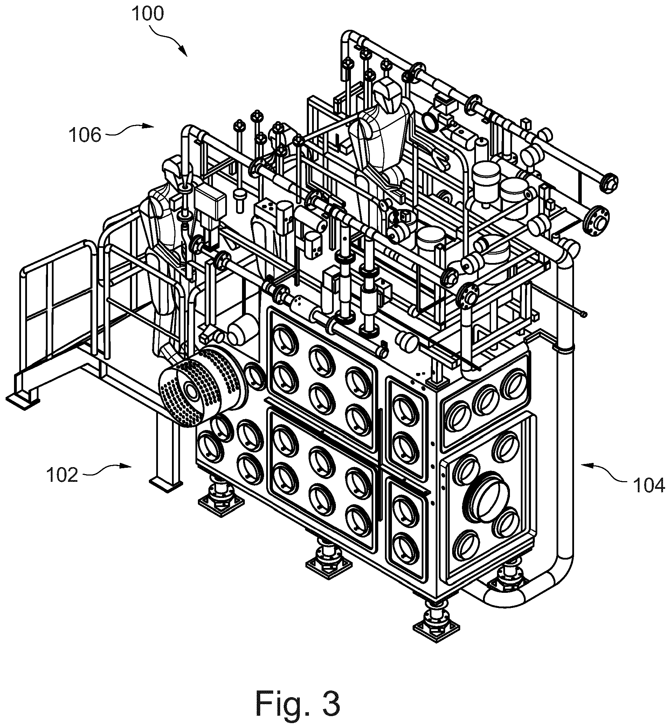

Fig. 3 shows an off gas glove box 100 that can be installed in a MOX sintering plant between a pre-sintering zone of a sintering furnace unit and an end user ventilation system (both not shown). The off gas glove box 100 comprises two redundant treatment line paths inside the off gas glove box. Each treatment line path is provided with a cyclone separator arrangement 40 according to Fig. 2.

As can be seen in Fig. 3, the off gas glove box 100 is structured in three different levels, having different heights seen from an underground on which the off gas glove box stands. The lowest level is ground level 102. The topmost level is the maintenance level 106. The middle level between the ground level 102 and the maintenance level 106 is the cleaning level 104. The structure with different levels improves cleanability and maintainability of the off gas glove box 100.

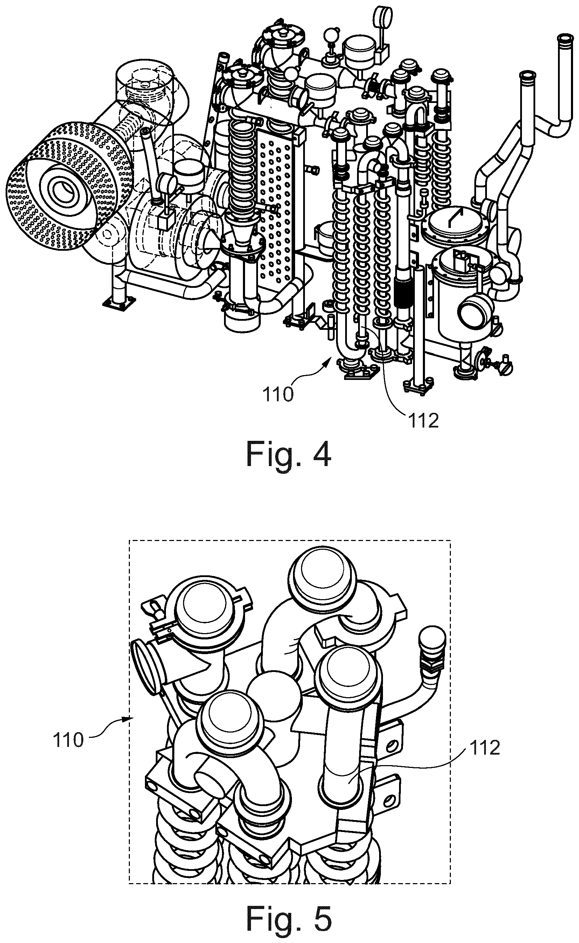

Fig. 4 shows two redundant treatment line paths for directing the off gas inside the off gas glove box of Fig. 3. Each treatment line path comprises a cyclone separator arrangement 40 according to Fig. 2 and at least one cooling unit 110 with a plurality of cooling lines (cooling pipes) 112 for cooling the off gas directed through the off gas glove box. In the shown embodiment, each cooling unit 110 comprises six cooling lines 112, which are arranged hexagonally. The hexagonal arrangement of the cooling lines 112 is shown in an enlarged detail view in Fig. 5. The hexagonal arrangement of the cooling lines 112 allows to reduce a base area of the off gas glove box 100 and is thus advantageous with regard to the needed installation space of the off gas glove box in the MOX sintering plant.

**List of reference signs**

| | | | |
|---|---|---|---|
| 10 | cyclone separator | 76 | pressure indicator |
| 12 | elongated hollow body | 80 | connection pipe |
| 14 | first end | 82 | pressure indicator |
| 16 | second end | 100 | off gas glove box |
| 18 | circumferential wall | 102 | ground level |
| 20 | cooling arrangement | 104 | cleaning level |
| 22 | first lateral gas inlet | 106 | maintenance level |
| 24 | flange | 110 | cooling unit |
| 26 | first tubular connector | 112 | cooling lines |
| 28 | second lateral gas inlet | | |
| 30 | connector | | |
| 32 | second tubular connection portion | | |
| 34 | gas outlet | | |
| 36 | cover | | |
| 38 | container | | |
| 40 | cyclone separator arrangement | | |
| 50 | filter device | | |
| 52 | lower end | | |
| 54 | elongated filter housing | | |
| 56 | filter cooling arrangement | | |
| 58 | upper end | | |
| 60 | four way connector | | |
| 62 | upper portion | | |
| 64 | blind flange | | |
| 66 | lower portion | | |
| 68 | left portion | | |
| 70 | blind flange | | |
| 72 | connection tube | | |
| 74 | thermocouple | | |

## Claims

1. Cyclone separator arrangement (40) for an off gas glove box (100), the cyclone separator arrangement (40) comprising
a cyclone separator (10) with an elongated hollow body (12) having a longitudinal axis, a first end (14), a second end (16) and a circumferential wall (18);
a first lateral gas inlet (22) for supplying the off gas to an inside of the elongated hollow body (12), the first lateral gas inlet (22) being provided in the circumferential wall (18) of the elongated hollow body (12);
a second lateral gas inlet (28) for supplying an additive gas to the inside of the elongated hollow body (12), the second lateral gas inlet (28) being provided in the circumferential wall (18) of the elongated hollow body (12) and being spaced from the first lateral gas inlet (22); and
a gas outlet (34) for outputting the off gas and the additive gas; and
wherein the cyclone separator arrangement (40) further comprises
a filter device (50) connected with the gas outlet (34) of the cyclone separator (10), the filter device (50) comprising an elongated filter housing (54) and a filter being arranged inside the filter housing (54); and
a container (38) connected with the elongated hollow body (12) for collecting the solid and/or liquid parts separated from the off gas,
wherein the elongated filter housing (54), the elongated hollow body (12) of the cyclone separator (10) and the container (38) are coaxially aligned;
**characterized in that** the elongated filter housing (54) has a first filter housing end (58) and an opposite second filter housing end (52), the first filter housing end (58) being configured as a four way connector (60), and the second filter housing end (52) being provided with an opening that is connected with the gas outlet (34) of the cyclone separator (10), preferably by a filter connection flange.

2. Cyclone separator arrangement (40) according to claim 1, wherein the first lateral gas inlet (22) is arranged on a portion of the circumferential wall (18) in the vicinity of the first end (14), and/or wherein the second lateral gas inlet (28) is arranged on a portion of the circumferential wall (18) in the vicinity of the first end (14).

3. Cyclone separator arrangement (40) according to claim 1 or 2, wherein the first lateral gas inlet (22) comprises a first tubular connector (26) that extends transversely, to the longitudinal axis of the elongated hollow body (12), and/or wherein the second lateral gas inlet (28) comprises a second tubular connector (32) that extends transversely, preferably perpendicularly, to the longitudinal axis of the elongated hollow body (12).

4. Cyclone separator arrangement (40) according to at least one of the preceding claims, wherein the gas outlet (34) is arranged at the first end (14) of the elongated hollow body (12).

5. Cyclone separator arrangement (40) according to at least one of the preceding claims, wherein the container (38) for collecting the separated solid and/or liquid parts is connectable to or connected with the second end (16) of the elongated hollow body (12), preferably by a container connection flange.

6. Cyclone separator arrangement (40) according to at least one of the preceding claims, wherein the container (38) for collecting the separated solid and/or liquid parts is a collection pot.

7. Cyclone separator arrangement (40) according to at least one of the preceding claims, wherein the container (38) for collecting the separated solid and/or liquid parts is removably connectable or connected with the elongated hollow body (12).

8. Cyclone separator arrangement (40) according to at least one of the preceding claims, further comprising a cooling arrangement (20) connectable with a cooling circuit for cooling the off gas inside the elongated hollow body (12), the cooling arrangement (20) being preferably in the form of at least one tube extending helically along an outer surface of the circumferential wall (18) of the elongated hollow body (12).

9. Cyclone separator arrangement (40) according to at least one of the preceding claims, wherein a minimum cross-sectional area of the first lateral gas inlet (22) is larger than a minimum cross-sectional area of the second lateral gas inlet (28), wherein in particular the ratio of the minimum cross-sectional area of the first lateral gas inlet (22) to the minimum cross-sectional area of the second lateral gas inlet (28) is at least 10:1, preferably at least 20:1, more preferably at least 30:1, still more preferably at least 40:1, in particular 44:1.

10. Cyclone separator arrangement (40) according to at least one of the preceding claims, wherein the four way connector (60) comprises at least one opening, the at least one opening being coaxially aligned with the filter and the filter housing (54) and being removably closed by a cover (64), preferably a blind flange, such that the filter is removable from the filter housing (54) via the at least one opening.

11. Off gas glove box (100) for a MOX pellet sintering furnace, the off gas glove box comprising a cyclone separator arrangement (40) according to at least one of the preceding claims.

## Patentansprüche

1. Zyklonabscheideranordnung (40) für eine Abgas-Glovebox (100), wobei die Zyklonabscheideranordnung (40) aufweist:
einen Zyklonabscheider (10) mit einem länglichen Hohlkörper (12) mit einer Längsachse, einem ersten Ende (14), einem zweiten Ende (16) und einer Umfangswand (18);
einen ersten seitlichen Gaseinlass (22) zum Zuführen des Abgases in einen Innenraum des länglichen Hohlkörpers (12), wobei der erste seitliche Gaseinlass (22) in der Umfangswand (18) des länglichen Hohlkörpers (12) ausgebildet ist;
einen zweiten seitlichen Gaseinlass (28) zum Zuführen eines Zusatzgases in den Innenraum des länglichen Hohlkörpers (12), wobei der zweite seitliche Gaseinlass (28) in der Umfangswand (18) des länglichen Hohlkörpers (12) ausgebildet und vom ersten seitlichen Gaseinlass (22) beabstandet ist; und
einen Gasauslass (34) zum Ausgeben des Abgases und des Zusatzgases, und
wobei die Zyklonabscheideranordnung (40) ferner aufweist:
eine Filtereinrichtung (50), die mit dem Gasauslass (34) des Zyklonabscheiders (10) verbunden ist, wobei die Filtereinrichtung (50) ein längliches Filtergehäuse (54) und einen im Inneren des Filtergehäuses (54) angeordneten Filter aufweist; und
einen mit dem länglichen Hohlkörper (12) verbundenen Behälter (38) zum Sammeln der aus dem Abgas abgeschiedenen festen und/oder flüssigen Teile,
wobei das längliche Filtergehäuse (54), der längliche Hohlkörper (12) des Zyklonabscheiders (10) und der Behälter (38) koaxial zueinander ausgerichtet sind;
**dadurch gekennzeichnet, dass**
das längliche Filtergehäuse (54) ein erstes Filtergehäuseende (58) und ein gegenüberliegendes zweites Filtergehäuseende (52) aufweist, wobei das erste Filtergehäuseende (58) als ein Vierwegeverbinder (60) konfiguriert ist und das zweite Filtergehäuseende (52) mit einer Öffnung versehen ist, die mit dem Gasauslass (34) des Zyklonabscheiders (10), vorzugsweise über einen Filterverbindungsflansch, verbunden ist.

2. Zyklonabscheideranordnung (40) nach Anspruch 1, wobei der erste seitliche Gaseinlass (22) an einem Abschnitt der Umfangswand (18) in der Nähe des ersten Endes (14) angeordnet ist, und/oder wobei der zweite seitliche Gaseinlass (28) an einem Abschnitt der Umfangswand (18) in der Nähe des ersten Endes (14) angeordnet ist.

3. Zyklonabscheideranordnung (40) nach Anspruch 1 oder 2, wobei der erste seitliche Gaseinlass (22) einen ersten rohrförmigen Verbinder (26) aufweist, der sich quer zur Längsachse des länglichen Hohlkörpers (12) erstreckt, und/oder wobei der zweite seitliche Gaseinlass (28) einen zweiten rohrförmigen Verbinder (32) aufweist, der sich quer, vorzugsweise senkrecht, zur Längsachse des länglichen Hohlkörpers (12) erstreckt.

4. Zyklonabscheideranordnung (40) nach mindestens einem der vorhergehenden Ansprüche, wobei der Gasauslass (34) am ersten Ende (14) des länglichen Hohlkörpers (12) angeordnet ist.

5. Zyklonabscheideranordnung (40) nach mindestens einem der vorhergehenden Ansprüche, wobei der Behälter (38) zum Sammeln der abgeschiedenen festen und/oder flüssigen Teile mit dem zweiten Ende (16) des länglichen Hohlkörpers (12) verbindbar oder verbunden ist, vorzugsweise über einen Behälterverbindungsflansch.

6. Zyklonabscheideranordnung (40) nach mindestens einem der vorhergehenden Ansprüche, wobei der Behälter (38) zum Sammeln der abgeschiedenen festen und/oder flüssigen Teile ein Sammeltopf ist.

7. Zyklonabscheideranordnung (40) nach mindestens einem der vorhergehenden Ansprüche, wobei der Behälter (38) zum Sammeln der abgeschiedenen festen und/oder flüssigen Teile lösbar mit dem länglichen Hohlkörper (12) verbindbar oder verbunden ist.

8. Zyklonabscheideranordnung (40) nach mindestens einem der vorhergehenden Ansprüche, ferner mit einer Kühlanordnung (20), die mit einem Kühlkreislauf zum Kühlen des Abgases im Inneren des länglichen Hohlkörpers (12) verbindbar ist, wobei die Kühlanordnung (20) vorzugsweise die Form mindestens eines Rohres aufweist, das sich spiralförmig entlang einer Au-ßenfläche der Umfangswand (18) des länglichen Hohlkörpers (12) erstreckt.

9. Zyklonabscheideranordnung (40) nach mindestens einem der vorhergehenden Ansprüche, wobei eine minimale Querschnittsfläche des ersten seitlichen Gaseinlasses (22) größer ist als eine minimale Querschnittsfläche des zweiten seitlichen Gaseinlasses (28), wobei insbesondere das Verhältnis zwischen der minimalen Querschnittsfläche des ersten seitlichen Gaseinlasses (22) und der minimalen Querschnittsfläche des zweiten seitlichen Gaseinlasses (28) mindestens 10:1, vorzugsweise mindestens 20:1, weiter bevorzugt mindestens 30:1, noch weiter bevorzugt mindestens 40:1, insbesondere 44:1, beträgt.

10. Zyklonabscheideranordnung (40) nach mindestens einem der vorhergehenden Ansprüche, wobei der Vierwegeverbinder (60) mindestens eine Öffnung aufweist, wobei die mindestens eine Öffnung koaxial mit dem Filter und dem Filtergehäuse (54) ausgerichtet ist und durch eine Abdeckung (64), vorzugsweise einen Blindflansch, lösbar verschlossen ist, so dass der Filter über die mindestens eine Öffnung aus dem Filtergehäuse (54) entnehmbar ist.

11. Abgas-Glovebox (100) für einen MOX-Pellets-Sinterofen, wobei die Abgas-Glovebox eine Zyklonabscheideranordnung (40) nach mindestens einem der vorhergehenden Ansprüche aufweist.

## Revendications

1. Agencement de séparateur à cyclone (40) pour une boîte à gants à gaz de dégagement (100), l'agencement de séparateur à cyclone (40) comprenant
un séparateur à cyclone (10) ayant un corps creux allongé (12) présentant un axe longitudinal, une première extrémité (14), une seconde extrémité (16) et une paroi circonférentielle (18) ;
une première entrée de gaz latérale (22) pour fournir le gaz de dégagement à l'intérieur du corps creux allongé (12), la première entrée de gaz latérale (22) étant ménagée dans la paroi circonférentielle (18) du corps creux allongé (12) ;
une seconde entrée de gaz latérale (28) pour fournir un gaz additif à l'intérieur du corps creux allongé (12), la seconde entrée de gaz latérale (28) étant ménagée dans la paroi circonférentielle (18) du corps creux allongé (12) et étant espacée de la première entrée de gaz latérale (22) ; et
une sortie de gaz (34) pour délivrer en sortie le gaz de dégagement et le gaz additif ; et
dans lequel l'agencement de séparateur à cyclone (40) comprend en outre
un dispositif de filtre (50) relié à la sortie de gaz (34) du séparateur à cyclone (10), le dispositif de filtre (50) comprenant un boîtier de filtre allongé (54) et un filtre étant agencé à l'intérieur du boîtier de filtre (54) ; et
un récipient (38) relié au corps creux allongé (12) pour collecter les parties solides et/ou liquides séparées du gaz de dégagement,
dans lequel le boîtier de filtre allongé (54), le corps creux allongé (12) du séparateur à cyclone (10) et le récipient (38) sont alignés coaxialement ;
**caractérisé en ce que** le boîtier de filtre allongé (54) présente une première extrémité de boîtier de filtre (58) et une seconde extrémité de boîtier de filtre opposée (52), la première extrémité de boîtier de filtre (58) étant configurée sous la forme d'un connecteur à quatre voies (60) et la seconde extrémité de boîtier de filtre (52) étant pourvue d'une ouverture qui est reliée à la sortie de gaz (34) du séparateur à cyclone (10), de préférence par une bride de raccordement de filtre.

2. Agencement de séparateur à cyclone (40) selon la revendication 1, dans lequel la première entrée de gaz latérale (22) est agencée sur une partie de la paroi circonférentielle (18) à proximité de la première extrémité (14) et/ou dans lequel la seconde entrée de gaz latérale (28) est agencée sur une partie de la paroi circonférentielle (18) à proximité de la première extrémité (14).

3. Agencement de séparateur à cyclone (40) selon la revendication 1 ou 2, dans lequel la première entrée de gaz latérale (22) comprend un premier connecteur tubulaire (26) qui s'étend transversalement à l'axe longitudinal du corps creux allongé (12) et/ou dans lequel la seconde entrée de gaz latérale (28) comprend un second connecteur tubulaire (32) qui s'étend transversalement, de préférence perpendiculaire, à l'axe longitudinal du corps creux allongé (12).

4. Agencement de séparateur à cyclone (40) selon au moins l'une des revendications précédentes, dans lequel la sortie de gaz (34) est agencée au niveau de la première extrémité (14) du corps creux allongé (12).

5. Agencement de séparateur à cyclone (40) selon au moins l'une des revendications précédentes, dans lequel le récipient (38) pour collecter les parties solides et/ou liquides séparées peut être relié, ou est relié, à la seconde extrémité (16) du corps creux allongé (12), de préférence par une bride de raccordement de récipient.

6. Agencement de séparateur à cyclone (40) selon au moins l'une des revendications précédentes, dans lequel le récipient (38) pour collecter les parties solides et/ou liquides séparées est un pot de collecte.

7. Agencement de séparateur à cyclone (40) selon au moins l'une des revendications précédentes, dans lequel le récipient (38) pour collecter les parties solides et/ou liquides séparées peut être relié, ou est relié, de manière amovible au corps creux allongé (12).

8. Agencement de séparateur à cyclone (40) selon au moins l'une des revendications précédentes, comprenant en outre un agencement de refroidissement (20) pouvant être relié à un circuit de refroidissement pour refroidir le gaz de dégagement à l'intérieur du corps creux allongé (12), l'agencement de refroidissement (20) étant, de préférence, sous la forme d'au moins un tube s'étendant de manière hélicoïdale le long d'une surface externe de la paroi circonférentielle (18) du corps creux allongé (12).

9. Agencement de séparateur à cyclone (40) selon au moins l'une des revendications précédentes, dans lequel l'aire de section transversale minimale de la première entrée de gaz latérale (22) est plus importante qu'une aire de section transversale minimale de la seconde entrée de gaz latérale (28), dans lequel, en particulier, le rapport de l'aire de section transversale minimale de la première entrée de gaz latérale (22) à l'aire de section transversale minimale de la seconde entrée de gaz latérale (28) est au moins 10:1, de préférence au moins 20:1, plus préférentiellement au moins 30:1, encore plus préférentiellement au moins 40:1, en particulier 44:1.

10. Agencement de séparateur à cyclone (40) selon au moins l'une des revendications précédentes, dans lequel le connecteur à quatre voies (60) comprend au moins une ouverture, la au moins une ouverture étant alignée coaxialement sur le filtre et le boîtier de filtre (54) et étant fermée de manière amovible par un couvercle (64), de préférence une bride feinte, de telle sorte que le filtre puisse être retiré du boîtier de filtre (54) par le biais de la au moins une ouverture.

11. Boîte à gants à gaz de dégagement (100) pour un four de frittage de pastilles de MOX, la boîte à gants à gaz de dégagement comprenant un agencement de séparateur à cyclone (40) selon au moins l'une des revendications précédentes.
